# EUROPEAN PATENT APPLICATION

(11) **EP 1 767 378 A2**
(43) Date of publication of application: **28.03.2007**
(21) Application number: 06254898.7
(22) Date of filing: 21.09.2006
(51) Int. Cl.: B41M 7/00, B41M 3/00

(54) **Printing process**

(30) Priority: 21.09.2005 GB 0519265
(71) Applicant: FIELD GROUP PLC, Old Amersham, Buckinghamshire HP7 0DD (GB)
(72) Inventor: Gott, Michael, Newcastle upon Tyne, NE12 9NP (GB)
(74) Representative: Leckey, David Herbert

(57) **Abstract**

A method of generating a printed metallic colour comprising printing a special colour using at most six colour selected from the three base colours, such as cyan, magenta and yellow, black, red or orange and blue or green using stochastic screening and applying a pearlescent varnish over the printed special colour.

## Description

The present invention is directed towards a printing process and in particular to a printing process for generating a plurality of special metallic colours.

It can be desirable in the field of printing and in particular in printing advertising material, such as the outsides of packaging or containers, to provide a metallic effect print that achieves a particularly attractive visual appearance. A known method of achieving such metallic print requires a special printing medium, such as ink, to be provided for use in the printing process, wherein this special printing medium both provides the metallic effect desired and also has exactly the desired colour and shading.

Printing methods using such special metallic printing media are, however, costly as the required colours have to be made up specially and/or as a large number of special colours need to be stocked.

A further disadvantage of this method is that, for a given printing machine, only a limited number of special metallic colours can be printed. A six stage printing press, for example, would typically use four of the six stages for printing in the colours cyan, magenta, yellow and black. Accordingly, only two printing stages are available for printing desired special metallic colours and no more than two such special metallic colours can be printed in a single printing run.

The known printing method is further disadvantageous in situations where a printing run is completed and the printing press is to be used for a different project using different special colours. When changing the configuration of the printing press from the previous printing run to a configuration need for a new printing run the printing stages used for printing the special metallic colours need to be cleaned thoroughly before a new colour can be used. This is time consuming and accordingly costly.

The present invention endeavors to overcome or at least mitigate these disadvantages and according to an aspect of the present invention there is provided a method of printing comprising the steps:
printing an area of special colour using at most six colours selected from three base colours, black, red or orange and green or blue; and
applying a pearlescent varnish over the area of special colour;
wherein each of said at most six selected colours is printed using stochastic screening.

With this method any desirable metallic colour effect can be reproduced without the need for making up and storing special metallic colour media.
Additionally, the set of colours chosen from the above mentioned colours can be used for a wide range of printing projects and printing stages do not need to be disassembled and cleaned when switching between printing projects or printing runs. The six colours selected may, for example, comprise the three base colours used in combination with black, red and blue.

The method may further comprise printing illustrative elements using at most four colours selected from the three base colours and black, wherein each of the at most four colours is printed using halftone screening. Thus illustrative elements not requiring the use of special colours can be printed easily and inexpensively in the same print run as the special metallic print, as they require only the colours already used for creating the special metallic colours. In an alternative arrangement, stochastic screening can also be used for printing the illustrative elements. Pearlescent varnish can be applied to the illustrative elements if metallic effect is required.

Pearlescent varnish is preferably applied to the areas of special colour in the same print run in which the special colour to be covered is printed.

Further areas of special colour using at most six colours selected from the three base colours, black, red or orange and green or blue can further be printed, wherein no pearlescent varnish is applied over the further area of special colour.

In the preferred embodiment, special non-metallic colours can be created alongside the special metallic colours in a single print run without the need for repeated print runs. This is not possible in the prior art method discussed above, as the number of printing stages available in a standard printing press is limited. Some printing presses have, for example six printing stages, four of which would be required for printing using the three base colours and black.
Another one or even both of the remaining two print stages would be required for printing the special metallic colours. Creating the special metallic colour from six special colours and applying a pearlescent varnish alleviates this problem and permits the printing of elements having a special non-metallic colour alongside elements having a special metallic colour and illustrative elements using only the three base colours and black.

A non-pearlescent varnish not creating a metallic effect may further be applied to the illustrative elements or to the further area of special colour, so as to create a gloss finish without metallic effect. This non-pearlescent varnish is preferably applied in the same print run in which special colour and the illustrative elements are printed. The illustrative element or the further area of special colour is preferably printed in one print run and the non-pearlescent varnish is applied in the same one print run.

A non-pearlescent varnish can be applied over the special colour and the pearlescent varnish can be applied over the non-pearlescent varnish. The non-pearlescent varnish is preferably applied over the entire printing area, thus eliminating the need to register the area in which the non-pearlescent varnish is applied to the areas containing the illustrative elements or the further areas of special colour.

The pearlescent varnish can applied over the non-pearlescent varnish while the non-pearlescent varnish is wet. In one preferred embodiment the non-pearlescent varnish and the pearlescent varnish repel each other. When the pearlescent varnish is applied over the non-pearlescent varnish, while the non-pearlescent is still wet, an 'orange peel' effect, that is an undulating upper surface of the varnish, is achieved. This 'orange skin' effect can provide the appearance of the printed area being embossed. This effect aids in giving a tactile feel to the print which improves the overall appearance of the printed design. Preferably, one of the pearlescent varnish and the non-pearlescent varnish comprises silicon and the other one of the pearlescent varnish and the non-pearlescent varnish comprises substantially no silicon.

Alternatively the non-pearlescent varnish is only applied to areas in which the pearlescent varnish is not applied.

According to another aspect of the present invention there is provided a method of printing comprising printing an area of special colour using at most six colours selected from three base colours, black, red and green or blue, wherein each of the at most six colours selected is printed using stochastic screening to generate the special colour.

This printing method is capable of generating any desired colour at least true to the eye. In one preferred embodiment, a special colour can, for example, be created using cyan, magenta and yellow as the three base colours and by combining these three base colours with black, red and blue. It is of course not necessary to use exactly six colours to produce the special colours and it may be desired to produce special colours that require the use of less than six colours. A maximum of six colours is, however, used to create the special colour.

A preferred red colour red colour has a D65 CIElab definition of 47.37, 56.86, 30.78. A preferred blue colour has a D65 CIElab definition of 32.86, 16.46, - 40.69.

The use of such colours is itself thought to be inventive, independently of the application of a pearlescent varnish, so from a further aspect, the present invention provides a method of printing an area of special colour using a red colour having a D65 CIElab definition of 47.37, 56.86, 30.78 and a blue colour having a D65 CIElab definition of 32.86, 16.46, -40.69.

This method may further use at most four further colours selected from the three base colours and black for printing the area of special colour.

In addition to the special colour, a further colour may be printed using at most four colours selected from the three base colours and black. This further colour accordingly only uses colours that are already used for printing the special colour and the further colour can accordingly be printed in the same number of print runs as the special colour.

The three base colours are preferably cyan, magenta and yellow but can alternatively be other base colours suitable for combination into a plurality of printed colours.

In a preferred method, the special colour is printed in a single print run using a six stage printing press. The six stage printing press preferably further comprises a varnish application stage for applying pearlescent varnish and a varnish application stage for applying non-pearlescent varnish.

According to another aspect of the present invention there is provided a set of colour media comprising a red colour medium with a D65 CIElab definition of 47.37, 56.86, 30.78 and a blue colour medium with a D65 CIElab definition of 32.86, 16.46, - 40.69.

The set of colour media further preferably comprises cyan, magenta, yellow and black colour media.

According to another aspect of the present invention there is further provided a method of printing comprising an area of special colour using a red colour having a D65 CIElab definition of 47.37, 56.86, 30.78.

According to another aspect of the present invention there is further provided a method of printing an area of special colour using a blue colour having a D65 CIElab definition of 32.86, 16.46, -40.69.

A preferred embodiment of the present invention will now be described by way of example only.

Prints comprising special metallic colours have been created in a six stage Lithrone 40 printing press sold by Komori Corporation (Komori Corporation, 3-11-1, Azumabashi, Sumida-ku, Tokyo, Japan) comprising six colour printing stages and two varnish applicator/coating units. The six printing stages of this printing press were loaded with six separate printing plates for consecutive printing of the three base colours and of black in the order black, cyan, magenta, yellow, black. The fifth and sixth print stages were used to print the special colours red and blue.

Halftone screening was used in areas of the printed image comprising only illustrative elements, that is elements that were not to be printed having a metallic appearance, using only the colours black, cyan, magenta and yellow. Stochastic screening was used for areas of the printed image comprising a special colour printed using colours selected from black, cyan, magenta and yellow in combination with red and blue.

The red and blue colours used for creating the special colours had a D65 CIElab definition of:

| | | | |
|---|---|---|---|
| Red | 47.37 | 56.86 | 30.78 |
| Blue | 32.86 | 16.46 | -40.69 |

were found to permit reproduction of any desired colour at least true to the eye.

Stochastic screening was performed using a SM113 screen computed using the Nexus RIP software package from Artworks Systems Inc. The printing plates for all six colours were produced using a Creo Trendsetter 5067 (Creo Products Inc.) plate setter capable of generating a pixel size of 10.4 µm or larger. Each of the pixels generated had a size of approximately 31.2 µm x 31.2 µm.

Following the application of the last colour, standard non-pearlescent varnish comprising silicon was applied to the entire print area. Both UV and water based varnishes were found to be suitable for use in the preferred embodiment. A pearlescent varnish comprising substantially no silicon was subsequently applied in the areas comprising the special colour intended to appear as metallic colours while the non-pearlescent varnish was still wet.

The two varnishes used repel each other due to the difference in silicon content and due to the repellent nature of the varnishes an undulating upper surface of the metallic varnish was created. Subsequent to the application of the second, pearlescent varnish, both varnishes were dried in a UV drying station arranged downstream of the varnish applicator/coating units.

Pearlescent varnishes used in preferred embodiments comprised a standard UV varnish giving a viscosity of 0.5 to 10 poise at 25 degrees centigrade of the finished pearlescent varnish and between 10 to 25% by weight of Mica particles in a particles size range of between 2 µm to 150 µm. The particles or particulates employed can further be coloured so as to emphasise a specific metallic colour effect that is to be achieved. For example, should a green metallic colour effect be desired, the exact special colour desired can be printed using at most six colours as discussed above, and subsequently be coated with a pearlescent varnish comprising green particles. The printing of the special colour can, of course also be modified to account for a change in the colour brought about by use of such coloured pearlescent varnishes, that is, when the special colour is printed, the special colour does not correspond to the colour desired but the desired metallic colour effect is achieved through combining the special colour with the coloured pearlescent varnish. Pearlescent varnishes having a white, green, blue, lilac or gold colour have been produced.

It will be appreciated that changes and modifications may be made to the disclosed embodiment without departing from the scope of the invention. For example other pearlescent varnishes could be employed. Pearlescent varnishes found to be useful can comprise Silicon Oxide particles, Aluminium Oxide particles or Bismuth Oxychloride particles. The particles used can also have an average particle size outside the above size range of 2 µm to 150 µm and/or more or less than 10 to 25% by weight of particles can be used in the varnish, dependent, for example, on the intensity of the metallic effect that may be desired.

The pearlescent varnish could also be applied over the non-pearlescent varnish after the non-pearlescent varnish has dried or varnishes that do not repel each other could be employed, should the described orange-peel effect not be desired. Alternatively, the non-pearlescent varnish could only be applied to areas that are not to receive the pearlescent varnish.

## Claims

1. A method of printing comprising the steps:
printing special colour using at most six colours selected from three base colours, black, red or orange and green or blue; and
applying a pearlescent varnish over the special colour;
wherein each of said at most six selected colours is printed using stochastic screening.

2. A method as claimed in claim 1, further comprising printing illustrative elements using at most four colours selected from the three base colours and black;
wherein each of said at most four colours is printed using halftone screening.

3. A method of printing as claimed in any preceding claim, wherein said special colour is printed in one print run and wherein the pearlescent varnish is printed in the same one print run.

4. A method as claimed in claim 1, 2 or 3, further comprising printing a further area of special colour using at most six colours selected from the three base colours, black, red or orange and green or blue, wherein no pearlescent varnish is applied over the further area of special colour.

5. A method of printing as claimed in claim 2, 3 or 4, wherein a further non-pearlescent varnish is applied over the illustrative elements or to the further area of special colour.

6. A method of printing as claimed in claim 5, wherein said illustrative element or said further area of special colour is printed in one print run and wherein said non-pearlescent varnish is applied in the same one print run.

7. A method of printing as claimed in any preceding claim, wherein a non-pearlescent varnish is applied over the special colour and wherein the pearlescent varnish is applied over the non-pearlescent varnish.

8. A method of printing as claimed in claim 7, wherein said non-pearlescent varnish is applied over the entire printing area.

9. A method of printing as claimed in claim 7 or 8, wherein the pearlescent varnish is applied over the non-pearlescent varnish while the non-pearlescent varnish is wet.

10. A method of printing as claimed in claim 9, wherein the non-pearlescent varnish and the pearlescent varnish repel each other.

11. A method of printing as claimed in claim 9 or 10, wherein one of the pearlescent varnish and the non-pearlescent varnish comprises silicon and the other one of the pearlescent varnish and the non-pearlescent varnish comprises substantially no silicon.

12. A method of printing comprising printing an area of special colour using at most six colours selected from three base colours, black, red and green or blue, wherein each of the at most six colours selected is printed using stochastic screening to generate the special colour.

13. A method of printing comprising an area of special colour using a red colour having a D65 CIElab definition of 47.37, 56.86, 30.78 and a blue colour having a D65 CIElab definition of 32.86, 16.46, -40.69.

14. A method of printing as claimed in claim 13, wherein said printing of said special colour further uses at most four further colours selected from three base colours and black.

15. A method of printing as claimed in claim 12 or 14, further comprising printing a further colour using at most four only colours selected from the three base colours and black.

16. A method of printing as claimed in any of claims 1 to 12, 14 or 15 wherein the three base colours are cyan, magenta and yellow.

17. A method of printing as claimed in any of claims 1 to 12, wherein said red colour has a D65 CIElab definition of 47.37, 56.86, 30.78.

18. A method of printing as claimed in any of claims 1 to 12, or 17, wherein said blue colour has a D65 CIElab definition of 32.86, 16.46, -40.69.

19. A method of printing as claimed in any preceding claim, wherein said special colour is printed in a single print run using a six stage printing press.

20. A method of printing as claimed in claim 19, wherein said printing press further comprises a stage for applying pearlescent varnish and a stage for applying non-pearlescent varnish.

21. A set of colour media comprising a red colour medium with a D65 CIElab definition of 47.37, 56.86, 30.78 and a blue colour medium with a D65 CIElab definition of 32.86, 16.46, -40.69.

22. A set of colour media as claimed in claim 21, further comprising cyan, magenta, yellow and black colour media.

23. A method of printing comprising an area of special colour using a red colour having a D65 CIElab definition of 47.37, 56.86, 30.78.

24. A method of printing an area of special colour using a blue colour having a D65 CIElab definition of 32.86, 16.46, -40.69.
